# EUROPÄISCHE PATENTSCHRIFT

(11) **EP 4 345 193 B1**
(45) Veröffentlichungstag und Bekanntmachung des Hinweises auf die Patenterteilung: **18.06.2025**
(21) Anmeldenummer: 22020472.1
(22) Anmeldetag: 29.09.2022
(51) Int. Cl.: C25B 1/04, C25B 15/02, C25B 15/08

(54) **VERFAHREN UND ANLAGE ZUR HERSTELLUNG EINES ODER MEHRERER ELEKTROLYSEPRODUKTE**
METHOD AND INSTALLATION FOR PRODUCING ONE OR MORE ELECTROLYSIS PRODUCTS
PROCÉDÉ ET INSTALLATION DE FABRICATION D'UN OU PLUSIEURS PRODUITS D'ÉLECTROLYSE

(43) Veröffentlichungstag der Anmeldung: 03.04.2024
(73) Patentinhaber: Linde GmbH, 82049 Pullach (DE)
(72) Erfinder: Wellenhofer, Anton, 82049 Pullach (DE); Chalakova, Mariyana, 82049 Pullach (DE); Lauchner, Daniela, 82049 Pullach (DE); Müller-Thorwart, Ole, 82049 Pullach (DE); Birk, Robert, 82049 Pullach (DE); Dillig, Marius, 82049 Pullach (DE); Fruhmann, Christian, 82049 Pullach (DE); Wolf, Andreas, 82049 Pullach (DE); Herzog, Robert, 82049 Pullach (DE)
(74) Vertreter: Fischer, Werner

(56) Entgegenhaltungen:
- WO-A1-01/06038
- DE-B1- 1 600 584
- JP-A- 2019 178 357
- JP-A- H08 144 078

## Beschreibung

Die vorliegende Erfindung betrifft ein Verfahren und eine Anlage zur Herstellung eines oder mehrerer Elektrolyseprodukte, insbesondere Wasserstoff und/oder Sauerstoff, unter Einsatz einer oder mehrerer Elektrolysezellen, insbesondere einer oder mehrerer Elektrolysezellen mit einer Protonenaustauschmembran.

### Hintergrund der Erfindung

Die Herstellung von Wasserstoff unter Verwendung von Elektrolysezellen mit Protonenaustauschmembranen (engl. Proton Exchange Membrane, PEM) ist bekannt. In entsprechenden Elektrolysezellen wird die Protonenaustauschmembran, die zur Leitung von Protonen, zur Abtrennung der Produktgase, und zur elektrischen Isolierung der Anoden- und Kathodenseite voneinander dient, durch einen festen Polymerelektrolyten gebildet. Durch den Einsatz von Elektrolysezellen mit Protonenaustauschmembranen kann ein Teil der Probleme hinsichtlich des Teillastbetriebs sowie der geringen möglichen Stromdichten, die bei der konventionellen alkalischen Elektrolyse auftreten, überwunden werden.

Aufgrund des vergleichsweise hohen Drucks des gebildeten Wasserstoffs bei der Verwendung von Elektrolysezellen mit Protonenaustauschmembran können Verbraucher direkt versorgt werden. Die verwendbaren hohen Stromdichten führen zu vergleichsweise geringen Betriebskosten, insbesondere in Fällen, in denen dynamische elektrische Energiequellen wie Wind und Sonne zum Einsatz kommen, deren Leistungsspitzen andernfalls nicht genutzt werden können. Der Polymerelektrolyt ermöglicht die Verwendung dünner Membranen von beispielsweise ca. 100 bis 200 µm bei zugleich hohen Drücken. Dies führt zu geringen ohmschen Verlusten, die in erster Linie durch die Leitung von Protonen durch die Membran und die Bildung von druckbeaufschlagtem Wasserstoff verursacht werden.

Die Polymerelektrolytmembran weist aufgrund ihrer festen Struktur eine niedrige Gasübergangsrate auf, was zu einer sehr hohen Produktgasreinheit führen kann. Dies kann insbesondere für die Speichersicherheit und für die direkte Verwendung, beispielsweise in einer Brennstoffzelle, vorteilhaft sein.

Spannungsverluste in einer entsprechenden Elektrolysezelle können insbesondere aufgrund interner elektrischer Widerstände, der Protonenleitfähigkeit, des Massentransports durch die Zelle und der Katalysatorausnutzung auftreten.

Die Anodenreaktion in einer Elektrolysezelle mit Protonenaustauschmembran wird gemeinhin als Sauerstoffentwicklungsreaktion (engl. Oxygen Evolution Reaction, OER) bezeichnet. An der Anode wird der flüssige Reaktant Wasser dem Katalysator zugeführt und zu Sauerstoff, Protonen und Elektronen oxidiert:

2 H₂O (I) → O₂ (g) + 4 H⁺ (aq) + 4 e⁻

Die Kathodenreaktion wird gemeinhin als Wasserstoffentwicklungsreaktion (engl. Hydrogen Evolution Reaction, HER) bezeichnet. Hierbei werden die zugeführten Elektronen mit den durch die Membran geleiteten Protonen kombiniert, wodurch gasförmiger Wasserstoff erzeugt wird:

4 H⁺ (aq) + 4 e⁻ → 2 H₂ (g)

Neben Wasserstoff von der Kathodenseite kann auch der in entsprechenden Elektrolysezellen an der Anodenseite gebildete Sauerstoff genutzt werden. Die vorliegende Erfindung kann sich auf die Gewinnung von Wasserstoff an der Kathodenseite und Sauerstoff an der Anodenseite einer entsprechenden Elektrolyse beziehen.

Die vorliegende Erfindung stellt sich die Aufgabe, die Herstellung von Wasserstoff und/oder Sauerstoff, insbesondere unter Einsatz von Elektrolysezellen mit Protonenaustauschmembran, zu verbessern und insbesondere sicherer und zuverlässiger zu gestalten. Typische Dokumente des Standes der Technik repräsentieren WO01/06038, JPH08144078 und JP2019178357.

### Offenbarung der Erfindung

Vor diesem Hintergrund schlägt die vorliegende Erfindung ein Verfahren und eine Anlage zur Herstellung eines oder mehrerer Elektrolyseprodukte, insbesondere Wasserstoff und/oder Sauerstoff, und insbesondere unter Einsatz einer Elektrolysezelle mit einer Protonenaustauschmembran, mit den Merkmalen der unabhängigen Patentansprüche vor. Ausgestaltungen sind jeweils Gegenstand der abhängigen Ansprüche und der nachfolgenden Beschreibung.

Wenngleich die vorliegende Erfindung nachfolgend überwiegend unter Bezugnahme auf eine Elektrolyse beschrieben wird, in der eine Protonenaustauschmembran verwendet wird, können Ausgestaltungen der vorliegenden Erfindung grundsätzlich auch unter Verwendung von anderen Elektrolysetechniken eingesetzt werden, insbesondere dann, wenn dort Probleme, die in der vorliegenden Erfindung adressiert werden, in gleicher oder vergleichbarer Weise auftreten. Die Bezugnahme auf eine Elektrolyse mit Protonenaustauschmembran erfolgt lediglich zur Vereinfachung und ohne Intention, die vorliegende Erfindung hierauf einzuschränken.

Ist hier von "einer" Elektrolysezelle, insbesondere mit "einer" Protonenaustauschmembran (jeweils im Singular), die Rede, versteht sich, dass Ausgestaltungen der vorliegenden Erfindung typischerweise mit mehreren solcher Zellen realisiert sind, wobei entsprechende Zellen insbesondere Teil eines Zellstapels (Stacks) bekannter Art sein können, in denen solche Zellen in Mehrzahl vorhanden sind. In einem derartigen Stack ist bei einer Elektrolyse unter Verwendung von Protonenaustauschmembranen eine Vielzahl von Anordnungen aus jeweils Anode, Protonenaustauschmembran und Kathode bereitgestellt, die jeweils durch Trenneinrichtungen und Mittel zur Wassereinspeisung bzw. Gasentnahme voneinander getrennt sind. Letztere können mit Einspeise- bzw. Sammelleitungen verbunden sein, die den gesamten Stapel versorgen. Bei anderen Arten der Elektrolyse kann ein vergleichbarer Stapelaufbau vorgesehen sein und auch hier können entsprechende Einspeise- und Sammelleitungen verwendet werden.

Ist daher vorliegend von einer "Anodenseite" bzw. "Kathodenseite" einer Elektrolysezelle irgendeiner Art die Rede, können diese Begriffe auch die Kathodenseiten bzw. Anodenseiten der Zellen entsprechender Zellstapel in Summe bezeichnen. Ein dieser/diesen Kathodenseite(n) (insgesamt) entnommenes Gas wird nachfolgend auch als "Kathodenentnahmegas" bezeichnet. Entsprechendes gilt an der Anodenseite, d.h. ein "Anodenentnahmegas".

Das Kathodenentnahmegas ist wasserstoffreich, das Anodenentnahmegas sauerstoffreich, wobei das Anodenentnahmegas jedoch typischerweise mehr Wasserstoff aufweist als das Kathodenentnahmegas Sauerstoff, da Wasserstoff typischerweise leichter an die Anodenseite übergeht als der Sauerstoff zur Kathodenseite. Durch den Einsatz von Protonenaustauschmembranen können, wie erwähnt, hohe Produktreinheiten erzielt werden, so dass das Kathodenentnahmegas sehr wenig Sauerstoff enthält. Aber auch in anderen Elektrolysetechniken können wasserstoffreiche bzw. sauerstoffreiche Kathoden- bzw. Anodenentnahmegase gebildet werden, die jeweils das andere Gas in einem geringeren Anteil enthalten. Der Begriff "reich" kann dabei insbesondere für einen Gehalt von mehr als 90%, 95%, 99% oder 99,5% auf Volumen-, Mengen- oder molarer Basis stehen.

Das Anodenentnahmegas wird, insbesondere bei der Elektrolyse mit Protonenaustauschmembranen, zusammen mit Wasser an der Anodenseite entnommen, d.h. von der Anodenseite wird zunächst ein Zweiphasenstrom ausgeführt. Nach einer Trennung in Gas- und Flüssigphase kann erstere beispielsweise einer Sauerstoffgewinnung zugeführt oder an die Atmosphäre abgegeben werden.

Ein Hauptproblem hinsichtlich des Zweiphasenstroms, der Sauerstoff und Wasser aufweist, ergibt sich aus dessen möglichem Wasserstoffgehalt. Angetrieben beispielsweise durch das Druckgefälle über die Protonenaustauschmembran kann Wasserstoff durch diese passieren, und zwar durch Permeation, verstärkt aber beim Auftreten von Defekten bzw. Rissen. Beispielsweise in Szenarien von Niedriglast, im Standby, bzw. bei Defekten kann dieser Wasserstoffgehalt ggf. die untere Explosionsgrenze (UEG) von ca. 4% Wasserstoff in Sauerstoff erreichen. Ein entsprechender Übergang von Wasserstoff kann grundsätzlich auch in anderen Elektrolysetechniken auftreten.

Die (untere) Explosionsgrenze eines Gases gibt den Gehalt in einem Gasgemisch an, ab dem eine Entzündung bzw. Explosion bei zugleich ausreichendem Sauerstoffgehalt möglich ist. Letzteres ist im Falle des sauerstoffreichen Anodenentnahmegases bzw. des genannten Zweiphasenstroms immer der Fall.

Bei einer Explosion handelt es sich um einen unkontrollierten Abbrand eines zündfähigen Gasgemischs mit laminarer Flammenfront. Eine Explosion unterscheidet sich von einer Detonation im Wesentlichen durch die Geschwindigkeit der Ausbreitung.

Bei einer Explosion liegt diese unterhalb, bei einer Detonation typischerweise deutlich oberhalb der Schallgeschwindigkeit. Durch Explosionen und Detonationen von Gasgemischen in Behältern und Rohrleitungen kommt es zu einem massiven Druckanstieg, der zum Bersten der Behälter und entsprechenden Folgeschäden führen kann. Typischerweise kann bei einer Explosion mit einer Druckerhöhung um den Faktor Zehn gerechnet werden. Die Auswirkungen einer Detonation sind deutlich schwerwiegender. Hier kann der Druckanstiegsfaktor 50 und mehr betragen. Eine Explosion kann nach einer bestimmten Anlauflänge und einer Mindestkonzentration an Brennstoff und Sauerstoff in eine Detonation umschlagen.

Eine Zündquelle im Bereich innerhalb und stromab einer Elektrolysezelle, beispielsweise mit Protonenaustauschmembran, bzw. eines entsprechenden Stacks, kann nicht vollständig ausgeschlossen werden. Damit muss eine mögliche Zündung des explosionsgefährdeten Gasgemisches bei der Auslegung einer entsprechenden Anlage angenommen werden.

Die Knallgasreaktion verläuft sehr schnell, so dass sich sehr rasch ausbreitende Flammengeschwindigkeiten ergeben, die oberhalb der Schallgeschwindigkeit liegen. Daher kann eine Explosion selbst in kleinen Räumen und Rohrleitungen in eine Detonation übergehen. Für ein Detonationsszenario müssen sehr hohe Explosionsdruckverhältnisse bei der Auslegung berücksichtigt werden.

Hierbei können sich auch dann, wenn eine Explosion bzw. Detonation "nur" in einem Separator zur Trennung des Zweiphasenstroms auftritt, Schäden in anderen Bereichen, insbesondere nachgeschalteten Apparaten wie Pumpen oder Wärmetauschern bzw. einer Elektrolysezelle bzw. einem Stack selbst ergeben, da der Explosionsdruck über das inkompressible Fluid (Wasser) auf diese übertragen wird.

Die vorliegende Erfindung ermöglicht sichere Lösungen für derartige Fälle und überwindet dabei die Nachteile des Standes der Technik. Herkömmlicherweise ist eine entsprechende explosions- bzw. detonationsfeste Auslegung bestenfalls sehr teuer und schlechtestenfalls technisch nicht realisierbar. Auch ein Schutz nachgeschalteter Apparate durch Druckentlastungsventile bzw. Berstscheiben kann herkömmlicherweise problematisch sein, da sich die Druckwelle der Explosion bzw. Detonation sehr rasch, d.h. mit ca. 3.000 m/s ausbreitet.

In dem vorliegend vorgeschlagenen Verfahren zur Herstellung eines oder mehrerer Elektrolyseprodukte, insbesondere Wasserstoff und/oder Sauerstoff, wird bzw. werden eine oder mehrere Elektrolysezellen, insbesondere mit einer Protonenaustauschmembran, verwendet, wobei der einen oder den mehreren Elektrolysezellen kathodenseitig ein wasserstoffreiches Kathodenentnahmegas entnommen wird, wobei der einen oder den mehreren Elektrolysezellen anodenseitig ein Anodenentnahmegas entnommen wird, wobei das Anodenentnahmegas der einen oder den mehreren Elektrolysezellen als Teil eines Zweiphasenstroms entnommen wird, wobei der Zweiphasenstrom das Anodenentnahmegas und eine Wasserphase aufweist, und wobei der Zweiphasenstrom oder ein Teil hiervon in einer Separatoranordnung in das Anodenentnahmegas und die Wasserphase getrennt wird. Das Anodenentnahmegas ist sauerstoffreich und weist aufgrund der erläuterten Effekte einen gewissen Wasserstoffgehalt auf, bzw. lässt sich ein gewisser Wasserstoffgehalt nicht vollständig verhindern.

Hierbei ist vorgesehen, dass als Separatoranordnung eine Separatoranordnung mit einem ersten Abschnitt, der einen ersten Gasraum und einen ersten Flüssigkeitsraum aufweist, und mit einem zweiten Abschnitt, der einen zweiten Gasraum und einen zweiten Flüssigkeitsraum aufweist, verwendet wird, wobei die Separatoranordnung derart ausgebildet ist, dass sich bei einer Befüllung des ersten Flüssigkeitsraums und des zweiten Flüssigkeitsraums ein Flüssigkeitsverschluss ausbildet, der einen Gaskontakt zwischen dem ersten Gasraum und dem zweiten Gasraum unterbricht. Der Flüssigkeitsverschluss kann beispielsweise durch ein Wehr und eine in den ersten Flüssigkeitsraum abtauchende Tauchwand, durch ein Überlaufrohr oder durch ein Steigrohr, wie weiter unten jeweils anhand entsprechender Ausführungsbeispiele erläutert, realisiert werden.

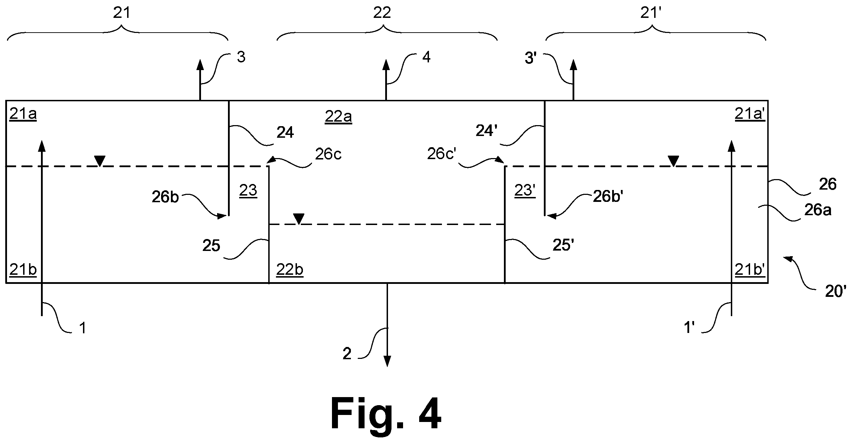

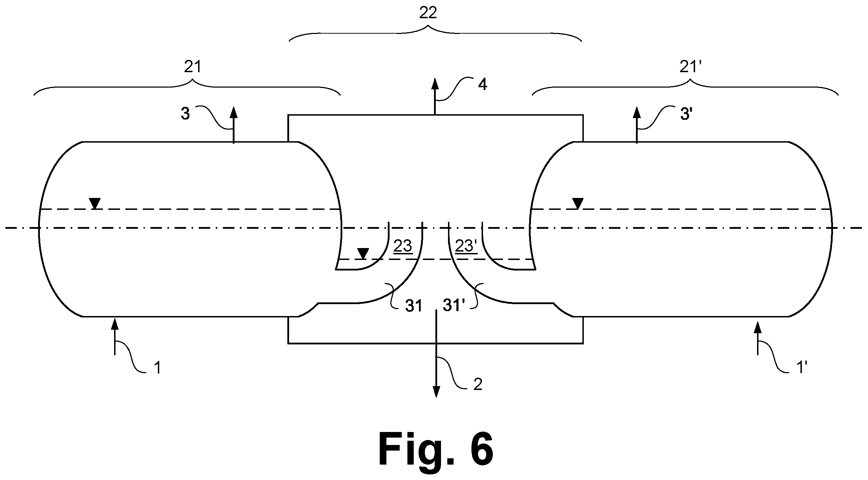

In Ausgestaltungen der Erfindung können auch mehrere entsprechende erste Abschnitte, die jeweils einen ersten Gasraum und einen ersten Flüssigkeitsraum aufweisen, vorgesehen sein, und zwei oder mehrere erste Abschnitte können einem gemeinsamen zweiten Abschnitt mit einem zweiten Gasraum und einem zweiten Flüssigkeitsraum zugeordnet sein. In diesem Fall sind die Gasräume der mehreren ersten Abschnitte jeweils durch einen Flüssigkeitsverschluss von dem gemeinsamen zweiten Gasraum getrennt. Die mehreren ersten Abschnitte können auch an zwei Seiten eines gemeinsamen zweiten Abschnitts ausgebildet sein und im Wesentlichen spiegelverkehrt aufgebaut sein, wie in Figur 4 und 6 in Ausführungsbeispielen veranschaulicht. Nachfolgend wird lediglich zur Vereinfachung von "einem" ersten Abschnitt im Singular gesprochen.

Bei einer Explosion oder Detonation kann dabei Flüssigkeit aus dem ersten Flüssigkeitsraum des ersten Abschnitts in den zweiten Abschnitt gedrückt werden. Der zweite Abschnitt kann dabei aufgrund des dort vorhandenen zweiten Gasraums als Puffer dienen, so dass die Druckwelle nicht über die Flüssigkeitsphase direkt weitergeleitet wird. Auf diese Weise können Schäden an nachgeordneten Apparaten vermieden werden.

Grundsätzlich können unterschiedliche Ausgestaltungen von Separatoranordnungen und Flüssigkeitsverschlüssen verwendet werden. In Ausgestaltungen der Erfindung ist eine Separatoranordnung insbesondere derart ausgebildet, dass sich die Wasserphase in dem ersten Abschnitt an einem Wehr bzw. einer zweiten Trennwand bis zu einer Anstauhöhe anstaut und über die zweite Trennwand in den zweiten Abschnitt abläuft. Durch eine unter den Flüssigkeitsspiegel in dem ersten Abschnitt abtauchende erste Trennwand werden der erste und der zweite Gasraum voneinander getrennt und die erste Trennwand und die zweite Trennwand bilden den Flüssigkeitsverschluss aus. Insbesondere kann eine derartige Separatoranordnung also eine erste Trennwand und eine zweite Trennwand aufweisen, wobei der Flüssigkeitsverschluss durch die erste Trennwand und die zweite Trennwand gebildet wird. Auf diese Weise kann lediglich durch eine druckfeste Außenwand und zwei Trennwände eine auf diese Weise besonders einfach, stabil und kostengünstig herstellbare Separatoranordnung gebildet werden.

In einer entsprechenden Ausgestaltung der vorliegenden Erfindung kann die Separatoranordnung also einen von einer Wandung umschlossenen Innenraum aufweisen, wobei die erste Trennwand nur einen oberen Teil des Innenraums fluiddicht unterteilt, wobei die zweite Trennwand nur einen unteren Teil des Innenraums fluiddicht unterteilt, und wobei die durch die erste Trennwand und die zweite Trennwand fluiddicht unterteilten Bereiche einander überschneiden. Die Überschneidung ist dabei lediglich durch eine Ausgestaltung der Trennwände bewirkbar, die in unterschiedlichen Höhen enden.

Die zweite Trennwand kann dabei den unteren Teil des Innenraums bis zu einer Stauhöhe fluiddicht unterteilen und die erste Trennwand kann den oberen Teil des Innenraums bis zu einer Abtauchhöhe fluiddicht unterteilen, wobei die Abtauchhöhe geodätisch unterhalb der Stauhöhe angeordnet ist.

Im Betrieb kann die Wasserphase in dem ersten Abschnitt mittels der zweiten Trennwand bis zu der Anstauhöhe angestaut werden, so dass die erste Trennwand in einen in der Anstauhöhe sich ausbildenden Flüssigkeitsspiegel der Wasserphase abtaucht. Vorteilhafterweise bleibt die Wasserphase dabei angestaut, indem ein entsprechender Zulauf sichergestellt wird und der Flüssigkeitsverschluss auf diese Weise stets verschlossen bleibt.

Der zweite Abschnitt kann in Ausgestaltungen der Erfindung zumindest teilweise durch einen Überlaufstrom der Wasserphase über die zweite Trennwand aus dem ersten Abschnitt gefüllt werden. Auch eine zusätzliche Wassereinspeisung kann vorgesehen sein, beispielsweise zum Ausgleich von Mindermengen und um ein Kavitieren der nachgeschalteten Pumpe zu vermeiden.

In dem zweiten Abschnitt wird insbesondere ein Flüssigkeitsspiegel der Wasserphase ausgebildet, der unterhalb des Flüssigkeitsspiegels der Wasserphase in dem ersten Abschnitt liegt, insbesondere um eine Rückströmung zu verhindern und ein ausreichendes Puffervolumen sicherzustellen. Dies kann durch Einstellen einer Entnahmemenge sichergestellt werden.

In anderen Ausgestaltungen kann die Separatoranordnung ein Überlaufrohr aufweisen, welches den Flüssigkeitsverschluss bildet, indem es beispielsweise in die in dem zweiten Flüssigkeitsraum angestaute Flüssigkeit eintaucht.

In einer spezifischen Ausgestaltung der vorliegenden Erfindung kann ein erster Abschnitt insbesondere durch einen zylindrischen Behälter mit einer oder zwei kalotten- oder kugelsegmentartigen terminalen Kappen gebildet sein, der mit seiner Zylinderachse horizontal ausgerichtet ist. Der erste Abschnitt kann einen ersten Durchmesser senkrecht zur Zylinderachse aufweisen. An den ersten Abschnitt anschließend kann der zweite Abschnitt insbesondere ebenfalls zylinderförmig bereitgestellt sein, wobei eine Zylinderachse des zweiten Abschnitts insbesondere ebenfalls horizontal ausgerichtet sein kann. Der zweite Abschnitt kann einen zweiten Durchmesser senkrecht zur Zylinderachse aufweisen, der insbesondere größer ist als der erste Durchmesser. Aus einem Bereich, der unterhalb einer durch die Zylinderachse des ersten Abschnitts definierten Ebene liegt, kann aus dem ersten Abschnitt, insbesondere aus einer terminalen Kappe, ein Steigrohr herausgeführt sein, das im weiteren Verlauf nach oben gekrümmt ist und in dem zweiten Abschnitt mündet. Die Anordnung wird dabei insbesondere derart betrieben, dass in den ersten Abschnitt Flüssigkeit in einer Menge eingespeist wird und dass aus dem zweiten Abschnitt Flüssigkeit in einer Menge entnommen wird, die jeweils derart bemessen ist, dass sich ein Flüssigkeitsspiegel ausbildet, der unterhalb der Mündung des Steigrohrs in dem zweiten Abschnitt liegt.

Die soeben erläuterte Ausgestaltung kann insbesondere umfassen, zwei im Wesentlichen identisch sowie spiegelverkehrt angeordnete erste Abschnitte und einen dazwischenliegenden zentralen zweiten Abschnitt bereitzustellen, so dass die Steigrohre aus den ersten Abschnitten in den zentralen zweiten Abschnitt münden. Die Erläuterungen gelten sinngemäß auch für mehr als zwei erste Abschnitte, die dann beispielsweise dreiecks-, kreuz-, sternförmig oder in Reihe um einen zweiten Abschnitt herum angeordnet sein können.

Der Zweiphasenstrom oder dessen in die Separatoranordnung eingespeister Teil wird hierbei in den ersten Abschnitt eingespeist, das Anodenentnahmegas wird aus dem ersten Gasraum entnommen, und die Wasserphase wird aus dem zweiten Abschnitt entnommen. Der Gasraum des zweiten Abschnitts kann über eine Leitung mit der umgebenden Atmosphäre verbunden sein, wobei eine entsprechende Leitung insbesondere bei einer Explosion oder Detonation Gas nach außen abgeben kann.

Die vorliegende Erfindung eignet sich, wie erwähnt, zur Vermeidung von Explosions- bzw. Detonationsfolgen auch dann, wenn das Kathodenentnahmegas zumindest zeitweise einen Wasserstoffgehalt von mehr als 4% und im verbleibenden Rest Sauerstoff aufweist.

Eine Anlage zur Herstellung eines oder mehrerer Elektrolyseprodukte, insbesondere Wasserstoff oder Wasserstoff und Sauerstoff, die eine oder mehrere Elektrolysezellen, insbesondere mit einer Protonenaustauschmembran, aufweist, ist ebenfalls Gegenstand der Erfindung, wobei die Anlage Mittel aufweist, die dafür eingerichtet sind, der einen oder den mehreren Elektrolysezellen kathodenseitig ein wasserstoffreiches Kathodenentnahmegas zu entnehmen und der einen oder den mehreren Elektrolysezellen anodenseitig ein Anodenentnahmegas zu entnehmen, wobei das Anodenentnahmegas Teil eines Zweiphasenstroms ist, der das Anodenentnahmegas und eine Wasserphase aufweist, und wobei die Anlage eine Separatoranordnung aufweist, die dafür eingerichtet ist, den Zweiphasenstrom oder einen Teil hiervon in das Anodenentnahmegas und die Wasserphase zu trennen.

Die Separatoranordnung ist dabei mit einem ersten Abschnitt, der einen ersten Gasraum und einen ersten Flüssigkeitsraum aufweist, und mit einem zweiten Abschnitt, der einen zweiten Gasraum und einen zweiten Flüssigkeitsraum aufweist, ausgebildet, wobei die Separatoranordnung derart ausgebildet ist, dass sich bei einer Befüllung des ersten Flüssigkeitsraums und des zweiten Flüssigkeitsraums ein Flüssigkeitsverschluss ausbildet, der einen Gaskontakt zwischen dem ersten Gasraum und dem zweiten Gasraum unterbricht.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 den Hintergrund der vorliegenden Erfindung veranschaulicht,
Figur 2 eine Anlage gemäß einer Ausgestaltung der Erfindung veranschaulicht, und
Figuren 3 bis 6 mögliche Details der Anlage gemäß Figur 2 veranschaulichen.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine Elektrolyse mit Protonenaustauschmembran erläutert. Wie mehrfach angesprochen, ist die Erfindung jedoch nicht hierauf beschränkt.

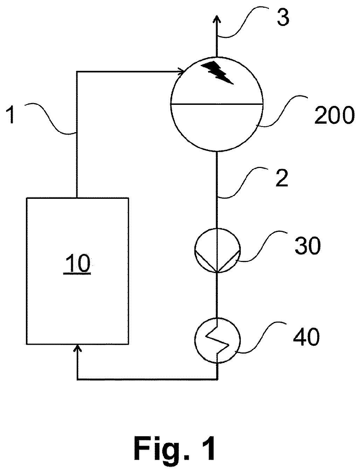

In Figur 1 ist ein anhand eines stark vereinfachten Flussdiagramms der Hintergrund der vorliegenden Erfindung veranschaulicht

In Figur 1 ist dabei der Wasser- bzw. Sauerstoffkreislauf an der Anodenseite einer Elektrolysezelle mit Protonenaustauschmembran veranschaulicht. Die Elektrolysezelle bzw. ein entsprechender Stack aus einer Vielzahl von Elektrolysezellen ist dabei mit 10 angegeben. Details und kathodenseitig entnommenes Kathodenentnahmegas, das im Wesentlichen reiner Wasserstoff ist, ist nicht veranschaulicht.

Wie bereits zuvor erläutert, wird anodenseitig zunächst ein Zweiphasenstrom 1 mit einem Wasser- und einem Gasanteil aus der Elektrolysezelle bzw. dem Stack 10 ausgeführt. Neben Sauerstoff findet sich in dem Gasanteil aufgrund Permeation durch die Protonenaustauschmembran, und verstärkt im Fall von Defekten der Protonenaustauschmembran, auch Wasserstoff.

Der Zweiphasenstrom wird in einen Separator 200 eingespeist, in dessen unterem Bereich der Wasseranteil des Zweiphasenstroms 1 abscheidet, so dass dieser als Wasserstrom 2 (mit gewissen Restanteilen von gelösten Gasen) abgezogen werden kann. Der Wasserstrom 2 kann mittels einer Pumpe 30 im Kreislauf geführt und mittels eines Wärmetauschers 40 temperiert werden.

Der Gasanteil kann in Form eines Gasstroms 3 ausgeführt und je nach Ausgestaltung des Verfahrens zur Bildung eines Sauerstoffprodukts genutzt oder durch Abblasen an die Atmosphäre verworfen werden.

Wie durch einen gezackten Pfeil veranschaulicht, kann in einem Gasraum in dem Separator 200, aber auch in den entsprechenden Leitungen, bei entsprechendem Wasserstoffgehalt in dem Gasstrom 3 eine Explosion bzw. Detonation entstehen. Wie erwähnt, können sich dabei auch dann, wenn eine Explosion bzw. Detonation "nur" in dem Separator 200 auftritt, Schäden in anderen Bereichen, insbesondere nachgeschalteten Apparaten wie der Pumpe 30, dem Wärmetauscher 40 oder der Elektrolysezelle bzw. dem Stack 10 ergeben, da der Explosionsdruck über das inkompressible Fluid (Wasser) auf diese übertragen wird.

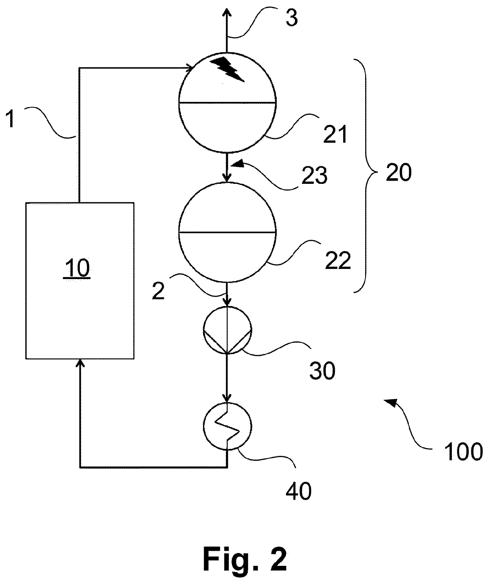

In Figur 2 ist eine Anlage gemäß einer Ausgestaltung der vorliegenden Erfindung veranschaulicht und insgesamt mit 100 bezeichnet. Die bereits zu Figur 1 erläuterten und dort entsprechend bezeichneten Elemente, d.h. die Elektrolysezelle bzw. der Stack 10, die Pumpe 30 und der Wärmetauscher 40, werden nicht erneut erläutert.

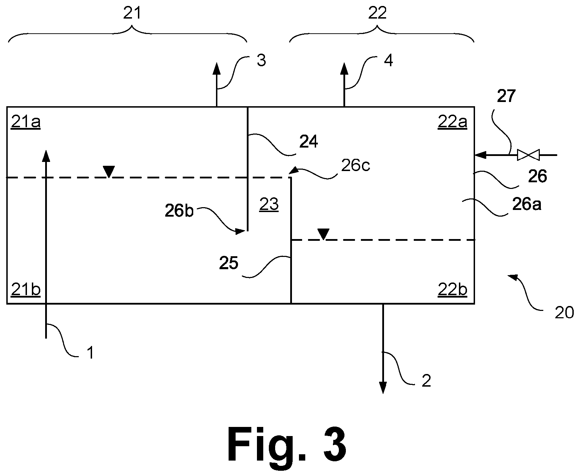

Wie in Figur 2 veranschaulicht, weist die Anlage 100 eine Separatoranordnung 20 auf, die aus einem ersten Abschnitt 21 und einem zweiten Abschnitt 22 gebildet ist, die jeweils einen Gas- und einen Flüssigkeitsraum aufweisen. Zwischen den Abschnitten 21 und 22 ist ein Flüssigkeitsverschluss 23 ausgebildet. Alternativ ausgedrückt ist die Separatoranordnung 20 derart ausgebildet, dass sich bei einer Befüllung während eines Betriebs der Anlage 100 ein Flüssigkeitsverschluss 23 ausbildet, der einen Gaskontakt zwischen den Gasräumen in dem ersten und zweiten Abschnitt 21 und 22 unterbricht. Details einer möglichen Ausgestaltung sind in den nachfolgenden Figuren 3 bis 6 veranschaulicht. Auf diese Weise kann der Bereich stromab des ersten Abschnitts 21 frei von explosiven bzw. detonationsfähigen Gasgemischen gehalten werden.

In der in Figur 2 veranschaulichten Anlage muss daher lediglich der Bereich des Zweiphasenstroms 1 und des ersten Abschnitts 21 mit den direkt damit verbundenen Elementen explosions- bzw. detonationsfest ausgestaltet sein, und insbesondere bei einer Explosion bzw. Detonation in dem ersten Abschnitt 21 kann die Druckwelle nicht oder nur in reduziertem Umfang auf die nachgeordneten Elemente wie die Pumpe 30 und den Wärmetauscher 40 durchschlagen. Dies wird dadurch erreicht, dass in dem zweiten Abschnitt 22 ein gasförmiges Puffervolumen geschaffen wird und die direkte Verbindung der beiden Flüssigkeitsräume unterbrochen ist.

In Figur 3 ist eine beispielsweise in einer Anlage 100 gemäß Figur 2 einsetzbare Separatoranordnung 20 veranschaulicht, deren Einbindung sich aus den identisch wie in Figur 2 bezeichneten Strömen 1, 2 und 3 ergibt. Ein weiterer Gasstrom ist in Figur 3 mit 4 bezeichnet.

Die Separatoranordnung 20 weist eine Wandung 26 auf, in der zwei Kammern ausgebildet sind, die den ersten Abschnitt 21 und den zweiten Abschnitt 22 bilden. Der Flüssigkeitsverschluss 23 ist durch zwei Trennwände gebildet, wobei eine erste Trennwand 24 einen Gasraum 21a des ersten Abschnitts 21 von einem Gasraum 22a des zweiten Abschnitts 22 abtrennt. Die zweite Trennwand 25 trennt dagegen einen Flüssigkeitsraum 21b des ersten Abschnitts 21 von einem Flüssigkeitsraum 22b des zweiten Abschnitts 22 ab.

Flüssigkeitsspiegel in dem ersten Abschnitt 21 und dem zweiten Abschnitt 22 sind jeweils gestrichelt veranschaulicht und zusätzlich mit Dreiecken bezeichnet. Erfolgt nun in dem ersten Abschnitt 21 eine Explosion bzw. Detonation, schwappt Flüssigkeit aus dem Flüssigkeitsraum 21b des ersten Abschnitts 21 in den Flüssigkeitsraum 22b des zweiten Abschnitts 22, jedoch kann die Explosionsdruckwelle nicht auf die nachgeschalteten Apparate durchschlagen. Gas aus dem Gasraum 22a des zweiten Abschnitts 22 kann in Form des Gasstroms 4 entweichen.

Bei Bedarf kann über eine Leitung 27 bzw. ein darin angeordnetes, nicht gesondert bezeichnetes Ventil zusätzliches Wasser in den zweiten Abschnitt 22 bzw. dessen Flüssigkeitsraum 22b eingespeist werden, zum Beispiel um im Elektrolyseprozess aufgespaltenes Wasser zu ersetzen.

Mit anderen Worten ist von der Wandung 26 ein Innenraum 26a umschlossen. Die erste Trennwand 24 unterteilt nur einen oberen Teil des Innenraums 26a fluiddicht und die zweite Trennwand 25 unterteilt nur einen unteren Teil des Innenraums 26a fluiddicht, wobei die durch die erste Trennwand 24 und die zweite Trennwand 25 fluiddicht unterteilten Bereiche einander in horizontaler Ansicht überschneiden.

Genauer unterteilt die zweite Trennwand 25 den unteren Teil des Innenraums 26a bis zu einer Stauhöhe 26c und die erste Trennwand 24 unterteilt den oberen Teil des Innenraums 26a bis zu einer Abtauchhöhe 26b. Die Abtauchhöhe 26b ist geodätisch unterhalb der Stauhöhe 26c angeordnet, so dass die Wasserphase 2 in dem ersten Abschnitt 21 mittels der zweiten Trennwand 25 bis zu der Anstauhöhe 26c angestaut werden kann und die erste Trennwand 24 in einen in der Anstauhöhe 26c sich ausbildenden Flüssigkeitsspiegel der Wasserphase 2 abtaucht.

Der zweite Abschnitt 22 wird zumindest teilweise durch einen Überlaufstrom der Wasserphase 2 über die zweite Trennwand 25 aus dem ersten Abschnitt 21 gefüllt. Es kann ferner über Leitung 27 Wasser eingespeist werden. Jedenfalls wird in dem zweiten Abschnitt 22 ein Flüssigkeitsspiegel der Wasserphase ausgebildet, der unterhalb des Flüssigkeitsspiegels der Wasserphase in dem ersten Abschnitt 21 liegt.

Der Zweiphasenstrom 1 wird in den ersten Abschnitt 21 eingespeist und das Anodenentnahmegas 3 wird aus dem ersten Gasraum 21a entnommen. Die Wasserphase 2 wird aus dem zweiten Abschnitt 22 ausgeleitet, insbesondere zu einer Pumpe 30. Der Flüssigkeitsspiegel in dem zweiten Flüssigkeitsraum 22b richtet sich dabei nach der Entnahmemenge in Form des Stroms 2.

In Figur 4 ist eine weitere, beispielsweise in einer Anlage 100 gemäß Figur 2 einsetzbare Separatoranordnung veranschaulicht, die hier jedoch mit 20' bezeichnet ist. Diese weist einen symmetrischen Aufbau auf, wobei ein weiterer erster Abschnitt bereitgestellt ist, der insgesamt mit 21' und dessen Komponenten jeweils mit entsprechenden, apostrophierten Bezugszeichen versehen sind. Die Einbindung ergibt sich aus den identisch wie in Figur 2 bezeichneten Strömen 1, 2 und 3, bzw. entsprechend apostrophiert bezeichneten Strömen 1' und 3'. Die Separatoranordnung 20' gemäß Figur 4 eignet sich insbesondere zur Anbindung mehrerer Elektrolysezellen bzw. Stacks 10 an eine gemeinsame Pumpe 30.

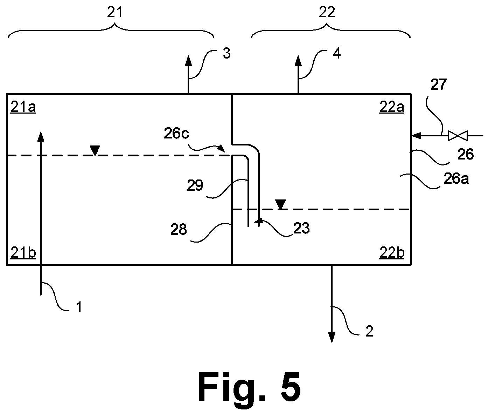

In Figur 5 ist eine weitere, beispielsweise in einer Anlage 100 gemäß Figur 2 einsetzbare Separatoranordnung veranschaulicht, die in Figur 5 jedoch nicht gesondert bezeichnet ist. Diese weist ein Überlaufrohr 29 auf, wobei Flüssigkeit in dem ersten Flüssigkeitsraum 21b bis zu der auch hier mit 26c bezeichneten Stauhöhe angestaut wird, und wobei das Überlaufrohr 29 das in den Flüssigkeitsraum 22b in dem zweiten Abschnitt 22 abtaucht und auf diese Weise den Flüssigkeitsverschluss 23 bildet.

In Figur 6 ist eine weitere, beispielsweise in einer Anlage 100 gemäß Figur 2 einsetzbare Separatoranordnung veranschaulicht, die in Figur 6 ebenfalls nicht gesondert bezeichnet ist.

In der hier veranschaulichten spezifischen Ausgestaltung der vorliegenden Erfindung kann ein erster Abschnitt 21 (ein entsprechender, spiegelbildlich angeordneter weiterer zweiter Abschnitt 21' kann vorhanden sein, wird aber nicht gesondert erläutert) insbesondere durch einen zylindrischen Behälter mit einer oder zwei kalotten- oder kugelsegmentartigen terminalen Kappen gebildet sein, der mit seiner Zylinderachse, die in Figur 6 strichpunktiert dargestellt ist, horizontal ausgerichtet ist. Der erste Abschnitt 21 kann einen ersten Durchmesser senkrecht zur Zylinderachse aufweisen.

An den ersten Abschnitt anschließend kann ein zweiter Abschnitt 22 insbesondere ebenfalls zylinderförmig, aber auch in beliebigen Ausgestaltungen, bereitgestellt sein, wobei eine Zylinderachse des zweiten Abschnitts insbesondere ebenfalls horizontal ausgerichtet sein kann und diese beispielsweise mit der Zylinderachse des ersten Abschnitts zusammenfällt. Der zweite Abschnitt 22 kann einen zweiten Durchmesser senkrecht zur Zylinderachse aufweisen, der insbesondere größer ist als der erste Durchmesser.

Aus einem Bereich, der unterhalb einer durch die Zylinderachse des ersten Abschnitts 21 definierten Ebene liegt, kann aus dem ersten Abschnitt, insbesondere aus einer terminalen Kappe, ein Steigrohr 31 herausgeführt sein, das im weiteren Verlauf nach oben gekrümmt ist und in dem zweiten Abschnitt 22 mündet. Die Anordnung wird dabei insbesondere derart betrieben, dass in den ersten Abschnitt Flüssigkeit in einer Menge eingespeist wird und dass aus dem zweiten Abschnitt Flüssigkeit in einer Menge entnommen wird, die jeweils derart bemessen ist, dass sich ein, hier gestrichelt veranschaulichter, Flüssigkeitsspiegel ausbildet, der unterhalb der Mündung des Steigrohrs in dem zweiten Abschnitt liegt.

## Patentansprüche

1. Verfahren zur Herstellung eines oder mehrerer Elektrolyseprodukte, wobei eine oder mehrere Elektrolysezellen (10) verwendet werden, wobei der einen oder den mehreren Elektrolysezellen (10) kathodenseitig ein wasserstoffreiches Kathodenentnahmegas entnommen wird, wobei der einen oder den mehreren Elektrolysezellen (10) anodenseitig ein Anodenentnahmegas (3) entnommen wird, wobei das Anodenentnahmegas (3) der einen oder den mehreren Elektrolysezellen (10) als Teil eines Zweiphasenstroms (1) entnommen wird, wobei der Zweiphasenstrom (1) das Anodenentnahmegas (3) und eine Wasserphase (2) aufweist, und wobei der Zweiphasenstrom (1) oder ein Teil hiervon in einer Separatoranordnung (20) in das Anodenentnahmegas (3) und die Wasserphase (2) getrennt wird, **dadurch gekennzeichnet, dass** als Separatoranordnung (20) eine Separatoranordnung (20) mit einem ersten Abschnitt (21), der einen ersten Gasraum (21a) und einen ersten Flüssigkeitsraum (21b) aufweist, und mit einem zweiten Abschnitt (22), der einen zweiten Gasraum (22a) und einen zweiten Flüssigkeitsraum (22b) aufweist, verwendet wird, wobei die Separatoranordnung (20) derart ausgebildet ist, dass sich bei einer Befüllung des ersten Flüssigkeitsraums (21b) und des zweiten Flüssigkeitsraums (22b) ein Flüssigkeitsverschluss (23) ausbildet, der einen Gaskontakt zwischen dem ersten Gasraum (21a) und dem zweiten Gasraum (22a) unterbricht und insbesondere zusätzlich durch einen entsprechend kontrollierten Flüssigkeitsstand im zweiten Abschnitt (22) ein Flüssigkontakt zwischen dem ersten Flüssigkeitsraum (21b) und dem zweiten Flüssigkeitsraum (22b) durch den zweiten Gasraum (22a) verhindert wird.

2. Verfahren nach Anspruch 1, bei dem eine oder mehrere Elektrolysezellen (10) mit einer Protonenaustauschmembran verwendet werden.

3. Verfahren nach Anspruch 1 oder 2, bei dem die Separatoranordnung (20) derart ausgebildet ist, dass sich die Wasserphase (2) in dem ersten Abschnitt (21) bis zu einer Anstauhöhe (26c) anstaut und über einen Flüssigkeitsverschluss (23) in den zweiten Abschnitt (22) abläuft.

4. Verfahren nach Anspruch 3, bei dem die Separatoranordnung (20) eine erste Trennwand (24) und eine zweite Trennwand (25) aufweist, wobei der Flüssigkeitsverschluss (23) durch die erste Trennwand (24) und die zweite Trennwand (25) gebildet wird.

5. Verfahren nach Anspruch 3, bei dem die Separatoranordnung (20) ein Überlaufrohr (29) aufweist, welches den Flüssigkeitsverschluss (23) bildet.

6. Verfahren nach einem der Ansprüche 1 oder 2, bei dem der erste Abschnitt (21) durch einen zylindrischen Behälter gebildet ist, der mit seiner Zylinderachse horizontal ausgerichtet ist und einen ersten Durchmesser senkrecht zu seiner Zylinderachse aufweist.

7. Verfahren nach Anspruch 6, bei dem der zylindrische Behälter eine oder zwei kalotten- oder kugelsegmentartige terminale Kappen aufweist.

8. Verfahren nach Anspruch 6 oder 7, bei dem der zweite Abschnitt (22) durch einen weiteren zylinderförmigen Behälter gebildet ist, insbesondere wobei eine Zylinderachse des zweiten Abschnitts (22) horizontal ausgerichtet ist.

9. Verfahren nach Anspruch 8, bei dem der zweite Abschnitt (22) einen zweiten Durchmesser senkrecht zu seiner Zylinderachse aufweist, der größer ist als der erste Durchmesser.

10. Verfahren nach einem der Ansprüche 6 bis 9, bei dem aus einem Bereich, der unterhalb einer durch die Zylinderachse des ersten Abschnitts (21) definierten horizontalen Ebene liegt, aus dem ersten Abschnitt (21) ein Steigrohr (31) herausgeführt ist, das im weiteren Verlauf nach oben gekrümmt ist und in dem zweiten Abschnitt (22) mündet.

11. Verfahren nach einem der vorstehenden Ansprüche, bei dem der Zweiphasenstrom (1) oder dessen in die Separatoranordnung (20) eingespeister Teil in den ersten Abschnitt (21) eingespeist wird.

12. Verfahren nach einem der vorstehenden Ansprüche, bei dem das Anodenentnahmegas (3) aus dem ersten Gasraum (21a) entnommen wird.

13. Verfahren nach einem der vorstehenden Ansprüche, bei dem die Wasserphase (2) aus dem zweiten Abschnitt (22) entnommen wird.

14. Verfahren nach einem der vorstehenden Ansprüche, bei dem das Anodenentnahmegas (3) zumindest zeitweise einen Wasserstoffgehalt von mehr als 4% und im verbleibenden Rest Sauerstoff aufweist.

15. Anlage (100) zur Herstellung eines oder mehrerer Elektrolyseprodukte, die eine oder mehrere Elektrolysezellen (10) aufweist, wobei die Anlage (100) Mittel aufweist, die dafür eingerichtet sind, der einen oder den mehreren Elektrolysezellen (10) kathodenseitig ein wasserstoffreiches Kathodenentnahmegas zu entnehmen und der einen oder den mehreren Elektrolysezellen (10) anodenseitig ein Anodenentnahmegas (3) zu entnehmen, wobei das Anodenentnahmegas (3) Teil eines Zweiphasenstroms (1) ist, der das Anodenentnahmegas (3) und eine Wasserphase (2) aufweist, und wobei die Anlage (100) eine Separatoranordnung (20) aufweist, die dafür eingerichtet ist, den Zweiphasenstrom (1) oder einen Teil hiervon in das Anodenentnahmegas (3) und die Wasserphase (2) zu trennen, **dadurch gekennzeichnet, dass** die Separatoranordnung (20) mit einem ersten Abschnitt (21), der einen ersten Gasraum (21a) und einen ersten Flüssigkeitsraum (21b) aufweist, und mit einem zweiten Abschnitt (22), der einen zweiten Gasraum (22a) und einen zweiten Flüssigkeitsraum (22b) aufweist, ausgebildet ist, wobei die Separatoranordnung (20) derart ausgebildet ist, dass bei einer Befüllung des ersten Flüssigkeitsraums (21b) und des zweiten Flüssigkeitsraums (22b) ein Flüssigkeitsverschluss (23) ausbildet wird, der einen Gaskontakt zwischen dem ersten Gasraum (21a) und dem zweiten Gasraum (22a) unterbricht und insbesondere zusätzlich durch einen entsprechend kontrollierten Flüssigkeitsstand im zweiten Abschnitt (22) ein Flüssigkontakt zwischen dem ersten Flüssigkeitsraum (21b) und dem zweiten Flüssigkeitsraum (22b) durch den zweiten Gasraum (22a) verhindert wird.

## Claims

1. A method for producing one or more electrolysis products, wherein one or more electrolytic cells (10) are used, wherein a hydrogen-rich cathode extraction gas is extracted on the cathode side of the one or more electrolytic cells (10), wherein an anode extraction gas (3) is extracted on the anode side of the one or more electrolytic cells (10), wherein the anode extraction gas (3) is extracted from the one or more electrolytic cells (10) as part of a two-phase flow (1), wherein the two-phase flow (1) comprises the anode extraction gas (3) and a water phase (2), and wherein the two-phase flow (1) or part thereof is separated into the anode extraction gas (3) and the water phase (2) in a separator arrangement (20), **characterized in that** the separator arrangement (20) used is a separator arrangement (20) having a first portion (21), which has a first gas chamber (21a) and a first liquid chamber (21b), and having a second portion (22), which has a second gas chamber (22a) and a second liquid chamber (22b), wherein the separator arrangement (20) is designed such that, when the first liquid chamber (21b) and the second liquid chamber (22b) are filled, a liquid seal (23) is formed which interrupts gas contact between the first gas chamber (21a) and the second gas chamber (22a), and in particular liquid contact between the first liquid chamber (21b) and the second liquid chamber (22b) is additionally prevented by the second gas chamber (22a) by means of a correspondingly controlled liquid level in the second portion (22).

2. The method according to claim 1, wherein one or more electrolytic cells (10) having a proton exchange membrane are used.

3. The method according to claim 1 or 2, wherein the separator arrangement (20) is designed such that the water phase (2) accumulates in the first portion (21) up to an accumulation height (26c) and flows via a liquid seal (23) into the second portion (22).

4. The method according to claim 3, wherein the separator arrangement (20) has a first partition wall (24) and a second partition wall (25), wherein the liquid seal (23) is formed by the first partition wall (24) and the second partition wall (25).

5. The method according to claim 3, wherein the separator arrangement (20) has an overflow pipe (29) which forms the liquid seal (23).

6. The method according to either claim 1 or claim 2, wherein the first portion (21) is formed by a cylindrical container, the cylinder axis of which is oriented horizontally and which has a first diameter perpendicularly to the cylinder axis thereof.

7. The method according to claim 6, wherein the cylindrical container has one or two dome- or spherical-segment-like terminal caps.

8. The method according to claim 6 or claim 7, wherein the second portion (22) is formed by a further cylindrical container, in particular wherein a cylinder axis of the second portion (22) is oriented horizontally.

9. The method according to claim 8, wherein the second portion (22) has a second diameter perpendicularly to the cylinder axis thereof that is greater than the first diameter.

10. The method according to any one of claims 6 to 9, wherein, from a region which lies below a horizontal plane defined by the cylinder axis of the first portion (21), a riser pipe (31) is led out of the first portion (21), which riser pipe is curved upwards in its further course and opens into the second portion (22).

11. The method according to any one of the preceding claims, wherein the two-phase flow (1) or the part thereof fed into the separator arrangement (20) is fed into the first portion (21).

12. The method according to any one of the preceding claims, wherein the anode extraction gas (3) is extracted from the first gas chamber (21a).

13. The method according to any one of the preceding claims, wherein the water phase (2) is extracted from the second portion (22).

14. The method according to any one of the preceding claims, wherein the anode extraction gas (3) has, at least temporarily, a hydrogen content of more than 4% and, in the remainder, oxygen.

15. A plant (100) for producing one or more electrolysis products, comprising one or more electrolytic cells (10), wherein the plant (100) has means which are configured to extract a hydrogen-rich cathode extraction gas on the cathode side of the one or more electrolytic cells (10) and to extract an anode extraction gas (3) on the anode side of the one or more electrolytic cells (10), wherein the anode extraction gas (3) is part of a two-phase flow (1) that comprises the anode extraction gas (3) and a water phase (2), and wherein the plant (100) has a separator arrangement (20) which is configured to separate the two-phase flow (1) or part thereof into the anode extraction gas (3) and the water phase (2), **characterized in that** the separator arrangement (20) is formed having a first portion (21), which has a first gas chamber (21a) and a first liquid chamber (21b), and having a second portion (22), which has a second gas chamber (22a) and a second liquid chamber (22b), wherein the separator arrangement (20) is designed such that, when the first liquid chamber (21b) and the second liquid chamber (22b) are filled, a liquid seal (23) is formed which interrupts gas contact between the first gas chamber (21a) and the second gas chamber (22a), and in particular liquid contact between the first liquid chamber (21b) and the second liquid chamber (22b) is additionally prevented by the second gas chamber (22a) by means of a correspondingly controlled liquid level in the second portion (22).

## Revendications

1. Procédé pour la fabrication d'un ou de plusieurs produits d'électrolyse, dans lequel une ou plusieurs cellules d'électrolyse (10) sont utilisées, dans lequel un gaz de prélèvement de cathode riche en hydrogène est prélevé côté cathode de la ou des cellules d'électrolyse (10), dans lequel un gaz de prélèvement d'anode (3) est prélevé côté anode de la ou des cellules d'électrolyse (10), dans lequel le gaz de prélèvement d'anode (3) est prélevé de la ou des cellules d'électrolyse (10) en tant que partie d'un courant diphasé (1), dans lequel le courant diphasé (1) présente le gaz de prélèvement d'anode (3) et une phase aqueuse (2), et dans lequel le courant diphasé (1) ou une partie de celui-ci est séparé dans un agencement séparateur (20) en gaz de prélèvement d'anode (3) et en phase aqueuse (2), **caractérisé en ce que,** en tant qu'agencement séparateur (20), un agencement séparateur (20) comportant une première section (21) qui présente une première chambre à gaz (21a) et une première chambre à liquide (21b) et comportant une seconde section (22) qui présente une seconde chambre à gaz (22a) et une seconde chambre à liquide (22b) est utilisé, dans lequel l'agencement séparateur (20) est conçu de telle sorte que, lors d'un remplissage de la première chambre à liquide (21b) et de la seconde chambre à liquide (22b), un joint liquide (23) est formé, lequel interrompt un contact gazeux entre la première chambre à gaz (21a) et la seconde chambre à gaz (22a), et en particulier est en outre empêché, grâce à un niveau de liquide contrôlé de manière appropriée dans la seconde section (22), un contact liquide entre la première chambre à liquide (21b) et la seconde chambre à liquide (22b) au moyen de la seconde chambre à gaz (22a).

2. Procédé selon la revendication 1, dans lequel une ou plusieurs cellules d'électrolyse (10) comportant une membrane échangeuse de protons sont utilisées.

3. Procédé selon la revendication 1 ou 2, dans lequel l'agencement séparateur (20) est conçu de telle sorte que la phase aqueuse (2) s'accumule dans la première section (21) jusqu'à une hauteur d'accumulation (26c) et s'écoule dans la seconde section (22) par l'intermédiaire d'un joint liquide (23).

4. Procédé selon la revendication 3, dans lequel l'agencement séparateur (20) présente une première paroi de séparation (24) et une seconde paroi de séparation (25), dans lequel le joint liquide (23) est formé par la première paroi de séparation (24) et la seconde paroi de séparation (25).

5. Procédé selon la revendication 3, dans lequel l'agencement séparateur (20) présente un tube de trop-plein (29) qui forme le joint liquide (23).

6. Procédé selon l'une des revendications 1 ou 2, dans lequel la première section (21) est formée par un récipient cylindrique dont l'axe de cylindre est orienté horizontalement et qui présente un premier diamètre perpendiculairement à son axe de cylindre.

7. Procédé selon la revendication 6, dans lequel le récipient cylindrique présente un ou deux capuchons terminaux en forme de calotte ou de segment sphérique.

8. Procédé selon la revendication 6 ou 7, dans lequel la seconde section (22) est formée par un autre récipient de forme cylindrique, en particulier dans lequel un axe de cylindre de la seconde section (22) est orienté horizontalement.

9. Procédé selon la revendication 8, dans lequel la seconde section (22) présente un second diamètre perpendiculairement à son axe de cylindre qui est supérieur au premier diamètre.

10. Procédé selon l'une des revendications 6 à 9, dans lequel, à partir d'une zone située en dessous d'un plan horizontal défini par l'axe de cylindre de la première section (21), un tuyau de montée (31) est guidé hors de la première section (21), lequel tuyau de montée, dans la suite de son chemin, est recourbé vers le haut et débouche dans la seconde section (22).

11. Procédé selon l'une des revendications précédentes, dans lequel le courant diphasé (1) ou sa partie injectée dans l'agencement séparateur (20) est injecté dans la première section (21).

12. Procédé selon l'une des revendications précédentes, dans lequel le gaz de prélèvement d'anode (3) est prélevé de la première chambre à gaz (21a).

13. Procédé selon l'une des revendications précédentes, dans lequel la phase aqueuse (2) est prélevée de la seconde section (22).

14. Procédé selon l'une des revendications précédentes, dans lequel le gaz de prélèvement d'anode (3) présente, au moins temporairement, une teneur en hydrogène supérieure à 4 % et, pour le reste, de l'oxygène.

15. Installation (100) pour la fabrication d'un ou de plusieurs produits d'électrolyse, laquelle présente une ou plusieurs cellules d'électrolyse (10), dans laquelle l'installation (100) présente des moyens qui sont conçus pour prélever un gaz de prélèvement de cathode riche en hydrogène côté cathode de la ou des cellules d'électrolyse (10) et pour prélever un gaz de prélèvement d'anode (3) côté anode de la ou des cellules d'électrolyse (10), dans laquelle le gaz de prélèvement d'anode (3) fait partie d'un courant diphasé (1) qui présente le gaz de prélèvement d'anode (3) et une phase aqueuse (2), et dans laquelle l'installation (100) présente un agencement séparateur (20) qui est conçu pour séparer le courant diphasé (1) ou une partie de celui-ci en gaz de prélèvement d'anode (3) et en phase aqueuse (2),
**caractérisée en ce que** l'agencement séparateur (20) est conçu avec une première section (21) qui présente une première chambre à gaz (21a) et une première chambre à liquide (21b) et avec une seconde section (22) qui présente une seconde chambre à gaz (22a) et une seconde chambre à liquide (22b), dans laquelle l'agencement séparateur (20) est conçu de telle sorte que, lors d'un remplissage de la première chambre à liquide (21b) et de la seconde chambre à liquide (22b), un joint liquide (23) est formé, lequel interrompt un contact gazeux entre la première chambre à gaz (21a) et la seconde chambre à gaz (22a), et en particulier est en outre empêché, grâce à un niveau de liquide contrôlé de manière appropriée dans la seconde section (22), un contact liquide entre la première chambre à liquide (21b) et la seconde chambre à liquide (22b) au moyen de la seconde chambre à gaz (22a).
